Europäisches Patentamt

European Patent Office

Office européen des brevets

(19)

(11) **EP 0 972 622 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(51) Int Cl.⁷: **B29B 9/06**, B01J 2/20

(21) Anmeldenummer: **98113312.7**

(22) Anmeldetag: **16.07.1998**

(54) **Verfahren zum Einstellen eines Schneidespaltes in einem Granulier-/Extrudierverfahren und Extrudiervorrichtung zur Durchführung des Verfahrens**

Method of adjusting cutting gap in a granulating-/extrusion method and extrusion apparatus for carrying out the method

Procédé pour ajuster la longueur de coupe dans un procédé de granulation /extrusion, et appareil d'extrusion pour la mise en oeuvre du procédé

(84) Benannte Vertragsstaaten:
**AT CH DE DK FR GB IT LI NL**

(43) Veröffentlichungstag der Anmeldung:
**19.01.2000 Patentblatt 2000/03**

(73) Patentinhaber: **BÜHLER AG**
**9240 Uzwil (CH)**

(72) Erfinder:
• **Rutishauser, Stefan**
**9000 St.Gallen (CH)**

• **Kuhn, Andreas**
**9000 St.Gallen (CH)**

(56) Entgegenhaltungen:
EP-A- 0 391 096          WO-A-93/18897
DE-A- 3 820 980          US-A- 4 614 307
US-A- 5 223 279

• **PATENT ABSTRACTS OF JAPAN vol. 006, no. 033 (M-114), 27. Februar 1982 & JP 56 148510 A (JAPAN STEEL WORKS LTD:THE), 18. November 1981**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum Einstellen des Spaltes zwischen mindestens einer Schneidkante und einer mit ihr zusammenwirkenden Extrudermatrize einer Extrudiervorrichtung nach dem Oberbegriff des Anspruches 1, sowie auf eine Extrudiervorrichtung zur Durchführung des Verfahrens nach dem Oberbegriff des Anspruches 5.

Im Rahmen dieser Erfindung soll der Begriff "Extrudiervorrichtung" im allgemeinsten Sinne dieses Wortes verstanden werden und kann daher beispielsweise auch Futterwürfelpressen mit Ringmatrize umfassen. Allerdings sind auch Flachmatrizen, etwa bei Kollerpressen, denkbar. Ferner braucht die Schneidkante nicht unbedingt den ausgepressten Strang abschneiden, sondern könnte, wie verschiedentlich bereits vorgeschlagen worden ist, ihn auch bloss einschneiden.

Wenn im Verlaufe dieser Beschreibung von einer "Schneidkante" die Rede ist, so soll darunter alles dasjenige verstanden werden, was zur Durchführung eines Schnittes geeignet ist. Bei Extrudiervorrichtungen ist es beispielsweise bekannt, dass nicht nur Messerblätter dafür Verwendung finden können, sondern auch mit Schneidkanten nach Art eines Fräsers ausgerüstete Räder, vor der Matrize rotierende Scheiben mit scharfen Kanten versehenen Öffnungen oder Aussparungen usw.

Aus der DE-C-38 20 980 ist es bekannt, eine Verstellvorrichtung für den axialen Abstand des Schneidmessers eines Granulators vor der Flachmatrize eines Schneckenextruders vorzusehen. Diese Verstellvorrichtung umfasst eine linear sich erstreckende Nockenfläche, die den gegenseitigen Abstand von Messer und Matrize beim seitlichen Verschieben des Granulators so einstellt, dass das Messer für die seitliche Verschiebung abgehoben und in Arbeitsstellung wieder an die Matrize herangeführt wird. Damit kann natürlich Wärmedehnungen während des Betriebes des Extruders, Abnützungserscheinungen von Messer und/oder Matrize etc. nicht Rechnung getragen werden, d.h. dass sich der relativ enge Spalt zwischen Schneidkante und Matrize unter diesen Einflüssen verändern kann. Bevorzugt wird es sein, wenn die Messung zugleich mit dem Start der Extrudiervorrichtung ausgelöst und später wenigstens einmal wiederholt wird.

Dies aber führt, wie die Anmelderin herausgefunden hat, zu mancherlei Nachteilen. Zum einen wird eine unerwünschte Verengung des Spaltes dazu führen, dass das Messer stärker an die Matrize gepresst wird und beide Teile einem höheren Verschleiss unterworfen sind, der auch noch mit höherem Energiebedarf erkauft wird. Zum andern aber resultiert ein zu grosser Abstand zu verschlechterten Schnittergebnissen am zu schneidenden Strang was sich in grösserer Staubentwicklung und damit auch in Materialverlust auswirkt. Dazu kommt, dass sich die Form des abzuschneidenden Pellets bei schlecht eingestellten Messerabständen verzerrt bzw. deformiert, was gegebenenfalls zu einem schlechter verkäuflichen Produkt führt. Schlecht abgeschnittenes Strangmaterial kann, wegen der Staubentwicklung aber auch schlechter lagerfähig sein.

Die WO 93/18897 offenbart ein Verfahren zur Bestimmung und Einstellung des Spaltes zwischen mindestens einer Schneidkante und einer mit ihr zusammenwirkenden Matrize einer Extrudiervorrichtung. Bei diesem Verfahren werden an der Matrize auftretende Schwingungen erfasst. Das Auftreten mindestens einer bestimmten Frequenz in dem Schwingungsspektrum wird dabei als Hinweis für eine in der Regel ungewünschte Berührung zwischen der bzw. den Schneidkanten und der Matrize gewertet. Hierfür wird das erfasste Schwingungssignal mittels einer schnellen Fourier-Transformation aus dem Zeitbereich in den Frequenzbereich transformiert.

Die JP 56148510A offenbart ein Verfahren zum Einstellen der relativen Position eines rotierenden Schneidmessers bezgl. einer Matrize einer Granulationsvorrichtung, die in einem Kühlmedium eingetaucht ist. Wenn das rotierende Schneidmesser die Matrize kontaktiert, d.h. wenn der Abstand Null ist, wird an der Matrize eine Stosswelle erzeugt. Die relative Schneidmesserposition, bei der eine Oszillation (Stosswelle) erfolgt wird, wird als Bezugspunkt verwendet, von dem aus das Schneidmesser geringfügig zurück gefahren wird, um ein Schleifen des Schneidmessers an der Matrize zu verhindern. Mit diesem Verfahren können z.B. thermische Ausdehnungen der Matrize und ggf. des Schneidmessers ausgeführt werden, um das Schleifen und somit einen vorzeitigen Verschleiss des Schneidmessers zu verhindern.

Es ist daher Ziel der vorliegenden Erfindung, gute Schneidergebnisse zu sichern, und dies gelingt durch die kennzeichnenden Merkmale des Anspruches 1. In überraschender Weise lässt sich damit auch noch ein anderes Problem lindern, indem sich nämlich gezeigt hat, dass der Verschleiss der Schneidkanten bzw. Messer erheblich herabgesetzt werden kann.

Das erfindungsgemässe Verfahren lässt sich auf vielerlei Arten verwirklichen. Beispielsweise kann die Messung im Stillstand der Extrudiervorrichtung durchgeführt werden. Es ist jedoch zu bedenken, dass der zu messende Abstand sehr klein ist und daher durch die im Betrieb unweigerlich erfolgenden Wärmedehnungen stark beeinflusst werden kann. Deshalb ist eine Vorgangsweise nach Anspruch 2 bevorzugt.

Ferner kann die Messung mit Hilfe der verschiedensten Mitteln, z.B. auf induktive Art durchgeführt werden, indem die räumliche Nähe der Schneidkante an der Matrize mittels einer Induktionsspule gemessen wird. Eine andere Möglichkeit liegt in einer kapazitiven Messung. Bevorzugt wird das erfindungsgemässe Verfahren jedoch im Sinne des Anspruches 3 ausgeführt, weil sich dabei besonders aussagekräftige Signale erhalten lassen.

Es ist zwar bekannt, Schallanalysen an Extrudern durchzuführen, wie etwa die DE-C-42 05 335 bezeugt. Dabei wurde jedoch die Schallanalyse so ausgerichtet, dass damit Eigenschaften des Produktes bestimmt wurden. Ein solches Vorgehen ist problematisch, weil sich das Produkt relativ rasch, beispielsweise durch Inhomogenitäten, verändern kann, in welchem Falle dann die Ergebnisse der Schallanalyse nicht mehr genau sind.

Offensichtlich war man bei all diesen Analysen derart auf die Eigenschaften des Produktes konzentriert, dass man die Möglichkeit nicht erkannte, eine Schallanalyse auch für den Messerabstand gegenüber der Matrize einzusetzen.

Ein noch weiter abliegender Stand der Technik ist in der EP-B-0486 571 zu sehen, welche ebenfalls den zwischen einer Schneidkante und einem zu schneidenden Produkt erzeugten Schall zu Einstellzwecken heranzieht. Für diese gilt aber auch, dass der dabei erzeugte Schall wiederum stark von der Art des Produktes, von seiner Einspannlänge (es handelt sich um ein Mikrotom) usw. abhängt. Deshalb ist in diesem Falle auch eine eingehende Kalibrierung mit jeweiliger Messung nötig, so dass eigentlich der Vorteil des Verfahrens, mindestens für Extrusionsverfahren, zweifelhaft ist.

Gemäss einer bevorzugten Ausführung einer Extrudiervorrichtung zur Durchführung des Verfahrens handelt es sich um eine solche mit den Merkmalen des Anspruches 5. Zwar umfasst das erfindungsgemässe Verfahren auch den Fall einer manuellen Regelung auf Grund von einem Anzeigeinstrument abgelesenen Werten, doch kann mit einer Vorrichtung nach Anspruch 5 eine Automatik erzielt werden. Die Extrudiervorrichtung kann dabei an sich beliebiger Art sein, wie dies oben beschrieben wurde.

Bevorzugt handelt es sich aber um eine Extrudiervorrichtung mit den Merkmalen des Anspruches 6, wobei die Matrize vorzugsweise eine Flachmatrize ist, obwohl Schneckenextruder am Ende ihres Gehäuses eine Ringmatrize aufweisen könnten. Wird nämlich das Verfahren im Sinne des Anspruches 3 ausgestaltet, so ergibt sich im Falle einer Flachmatrize eine geringere Abweichung des Schallspektrums, auch wenn diese Matrize unterschiedlichen Temperaturen ausgesetzt ist.

Bezüglich des Schallspektrums ist es zwar vorteilhaft, wenn die Filter nach den Ansprüchen 8 bzw. 9 vorhanden sind, doch kann an Stelle dessen (oder zusätzlich) auch ein nur in den interessierenden Bereichen empfindlicher Sensor verwendet werden.

Weitere Einzelheiten der Erfindung ergeben sich an Hand der nachfolgenden Beschreibung von in der Zeichnung schematisch dargestellten Ausführungsbeispielen. Es zeigen:

Fig. 1      eine erste Ausführungsform der Erfindung in Form einer axonometrischen Ansicht eines Schneckenextruders; die

Fig. 2-4      eine Reihe von bei Messungen gewonnenen Schallbildern;

Fig. 5      eine Seitenansicht einer weiteren Ausführungsform;

Fig. 6      den Ablauf eines in einem Speicher vorgesehenen Messprogrammes; und

Fig. 7      den Ablauf eines in einem Speicher vorgesehenen Kalibrierprogrammes.

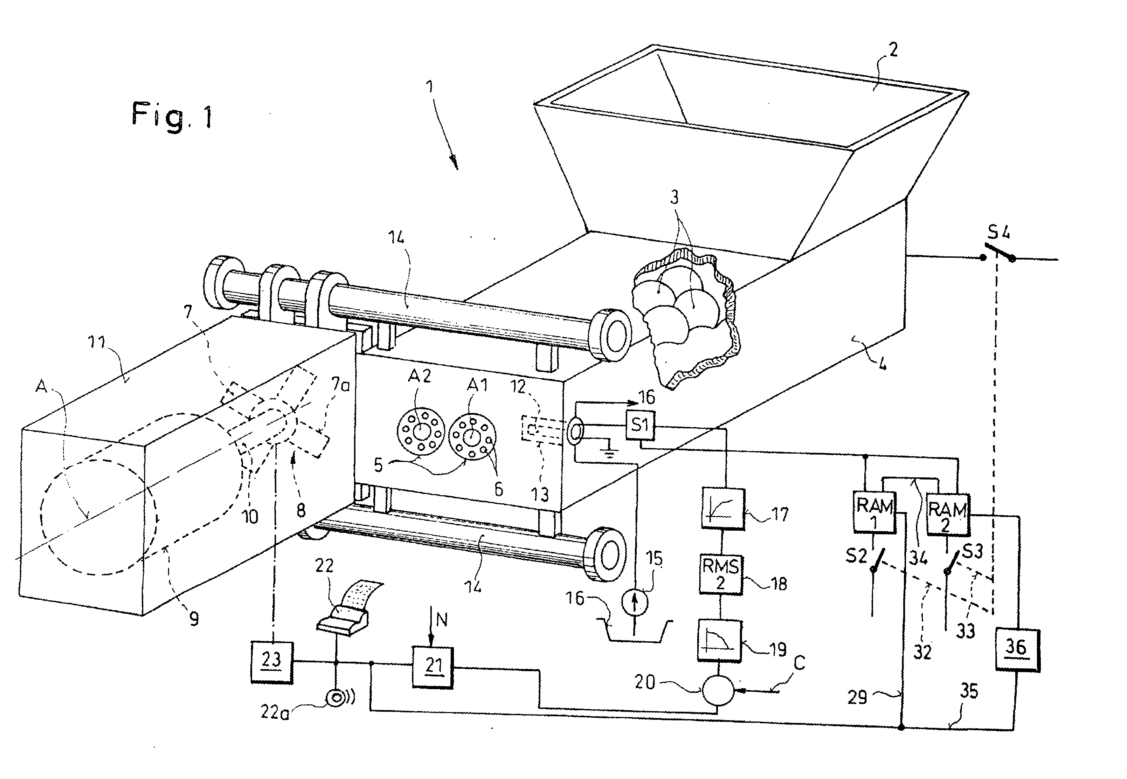

In Fig. 1 ist ein Schneckenextruder 1 dargestellt, dem das zu verarbeitende Material, z.B. der Rohstoff für ein zu fertigendes Nahrungsmittel, über einen Einfülltrichter 2 zuführbar ist und innerhalb des Extruders 1 durch wenigstens eine, im dargestellten Ausführungsbeispiel jedoch durch zwei Extruderschnecken 3 innerhalb eines Extrudergehäuses 4 verarbeitet wird. Am Ausgange des Extruders 1 befindet sich mindestens eine Matrizenplatte (Flachmatrize) 5, über deren Öffnungen 6 das verarbeitete Material auspressbar ist.

Vor dieser Matrizenplatte 5 ist zur Herstellung eines Granulates ein mindestens eine Schneidkante 7a an einem zugehörigen Messer 7, vorzugsweise aber mehrere, insbesondere in gleichem Winkelabstand voneinander bezüglich einer Drehachse A gelegene Messer 7 als Messerkopf 8, vorgesehen, der von einem Motor 9 über eine Welle 10 antreibbar ist. Die gesamte Granuliervorrichtung 7 bis 10 ist in einem Messergehäuse 11 untergebracht, dessen Stromzufuhr hier nicht dargestellt ist. Wie ersichtlich, ist das Gehäuse 11 entlang von Führungssäulen 14 seitlich verschiebbar und kann dadurch aus einer Arbeitslage, in der die Messer der Matrizenplatte 5 dicht gegenüberliegen und mit ihr zum Schneiden des aus den Öffnungen 6 austretenden Strangproduktes zusammenwirken, in die aus Fig. 1 ersichtliche Ruhelage verschoben werden.

Wenn die Messer 7 in ihrer Arbeitslage der Matrize 5 gegenüberliegen, ist ein minimaler Spalt bzw. Abstand zur Matrize einzustellen, d.h. die Messer werden in der Praxis unmittelbar über der Oberfläche der Matrize 5 gedreht werden. Dabei kommt es zu Schwingungen der Matrizenplatte 5, die, wie gefunden wurde, für den axialen Abstand der Messer 7 von der Platte 5 charakteristisch sind, wie später noch gezeigt wird. Diese Schwingungen sind deshalb ziemlich aussagekräftig, weil ja die beiden miteinander zusammenwirkenden Teile, nämlich die Matrizenplatte 5 und die Messer 7 im wesentlichen stets dieselben sind.

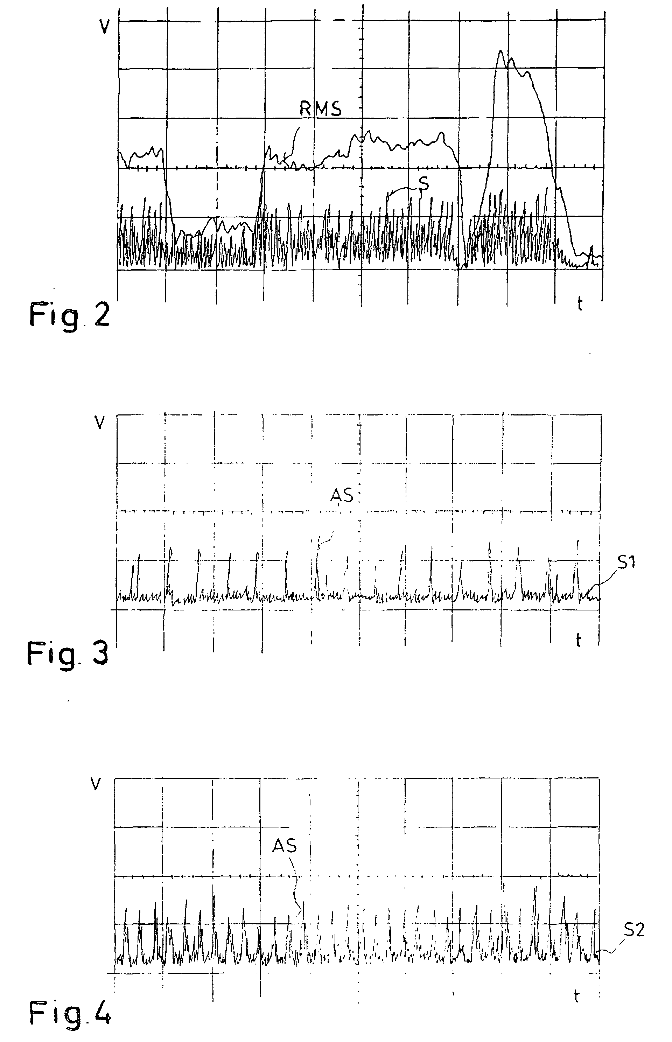

Die Schwingungen sind in Fig. 2 an Hand einer Kurve S dargestellt. Durch Berechnung des quadrierten Effektivwertes (RMS) bzw. des quadrierten Mittelwertes erhält man ein Mass für die Leistung und eine Kurve RMS. Man sieht, dass die Kurve S zunächst relativ unspezifisch aussieht, so dass es im Stande der Technik wohl verborgen geblieben ist, dass damit ein Mass für den Abstand der Messer 7 von der Matrize 5 gewonnen werden kann.

Filtert man das Messergeräusch richtig aus, so erhält man beispielsweise entweder die Kurve S1 nach Fig. 3 oder die Kurve S2 nach Fig. 4. Jede der beiden Kurven S1, S2 ist eine Darstellung der Signalspannung V gegenüber der Zeit t und jede der beiden Kurven S1, S2 zeigt Amplitudenspitzen AS. Im Vergleich der Fig. 3 und der Fig. 4 wird man aber finden, dass die Frequenz dieser Spitzen AS in Fig. 4 doppelt so hoch ist als in Fig. 3. Der Grund liegt einfach darin, dass die Spitzen das Schleifen jeweils eines der Messer 7 über die Oberfläche der Matrize 5 bedeuten. Das heisst aber, dass man, gleichgültig welche Art von Sensor man wählt (wie eingangs erläutert), nicht nur den Abstand der jeweiligen Schneidklinge 7a von der Matrizenoberfläche bestimmen kann, sondern durch Bestimmen der Frequenz dieser Spitzen AS auch feststellen kann, ob nur ein Messer an der Oberfläche der Matrize 5 schleift (wie im Falle der Fig. 3) oder zwei Messer (wie im Falle der Fig. 4). Damit lässt sich also ausser dem Messerabstand auch noch eine mangelnde Parallelität des Messerkopfes 8 zur Matrizenoberfläche herauslesen, wenn nämlich das Schleifsignal S1 bzw. S2 zyklische Ungleichmässigkeiten aufweist.

Es wurde bereits erwähnt, dass sich die Messung prinzipiell induktiv, kapazitiv, ggf. auch optisch durchführen lässt. Erfindungsgemäss wird sie aber durch eine Schallmessung durchgeführt, wobei zweckmässig der Körperschall im Bereiche der Matrize 5 gemessen wird. Es hat sich nämlich erwiesen, dass die Messung des Schalles zu störungsfreieren Ergebnissen führt als die anderen erwähnten Möglichkeiten. Wie und wo der jeweilige Schallsensor untergebracht wird, ist nicht kritisch, doch sollte er wenigstens im Bereiche der Matrize 5, d.h. nahe dieser oder an dieser vorgesehen sein. Auch die Ausrichtung des Sensors ist nicht kritisch, d.h. der Schall kann sowohl in Axialrichtung als auch radial aufgenommen werden.

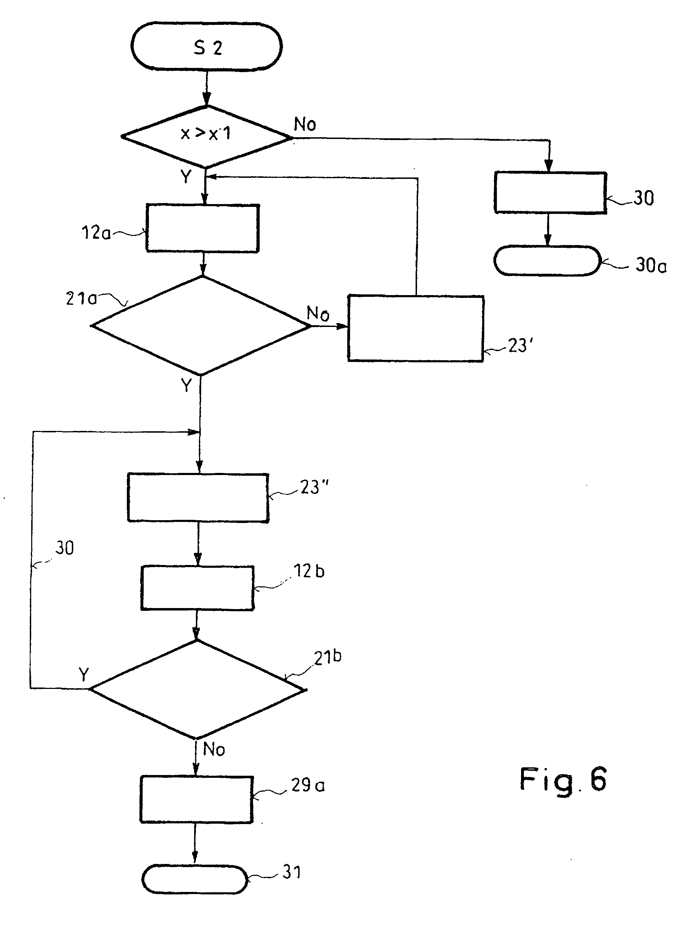

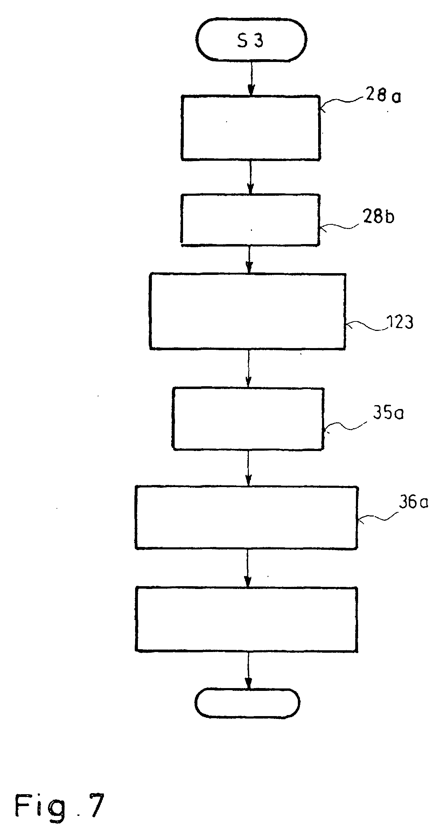

In Fig. 1 ist eine radiale Anordnung (bezüglich einer Schneckenachse A1) eines Sensors 12 veranschaulicht, der mit einem Kühlmantel 13 versehen ist. Wie schematisch angedeutet ist, wird dem Kühlmantel 13 Kühlmittel, z.B. Wasser, über eine Pumpe 15 (oder im Falle von Luft ein Gebläse) aus einem Vorrat 16 (oder aus der Umgebung bzw. von einer Kühleinrichtung) zugeführt, dem das erwärmte Kühlmittel auch wieder zufliesst. Die Art der Kühlung ist nicht kritisch, d.h. sie kann auch ein verdampfbares Kühlmittel, Luft od. dgl. umfassen. Das vom Schallsensor 12 gewonnene elektrische Signal geht, zweckmässig nach einer von einem Messprogrammspeicher RAM1 betätigten Schaltstufe S1, vorzugsweise erst über einen Hochpass 17 von wenigstens 1 kHz, im Bedarfsfall von 10 kHz, bevorzugt aber von etwa 5 kHz. Ferner ist noch ein Speicher RAM2 für ein Kalibrierprogramm vorgesehen. Diese Programm werden später an Hand der Fig. 6 und 7 erläutert werden. Jedem der Speicher RAM1, RAM2, die an sich beliebig ausgestaltet sein können, ist ein Schalter S2 bzw. S3 zur Aktivierung des jeweiligen Programmes vorgeschaltet.

Nach dem Hochpassfilter 17 durchläuft das so gefilterte Signal vorteilhaft eine Rechenstufe 18 zur Berechnung des quadratischen Effektivwertes RMS nach der Formel

$$U_{eff} = \sqrt{\frac{1}{T} \int_0^T U^2 \, dt}$$

mit T = Zeitintervall; U = die entsprechende Spannun,g wodurch die, gegenüber der Kurve S deutlichere Kurve RMS der Fig. 2 gewonnen wird. Diese Kurve S in Fig. 2 stellt bereits das Ergebnis einer Tiefpassfilterung dar, weil sie an sich nicht so linear verläuft, wie in Fig. 2, sondern mit einer relativ geringen Frequenz von maximal 10 Hz, meist deutlich darunter, z.B. 1-5 Hz, "atmet", d.h. auf- und abschwankt. Deshalb ist es vorteilhaft, innerhalb des Messkreises ein entsprechendes Tiefpassfilter 19 vorzusehen.

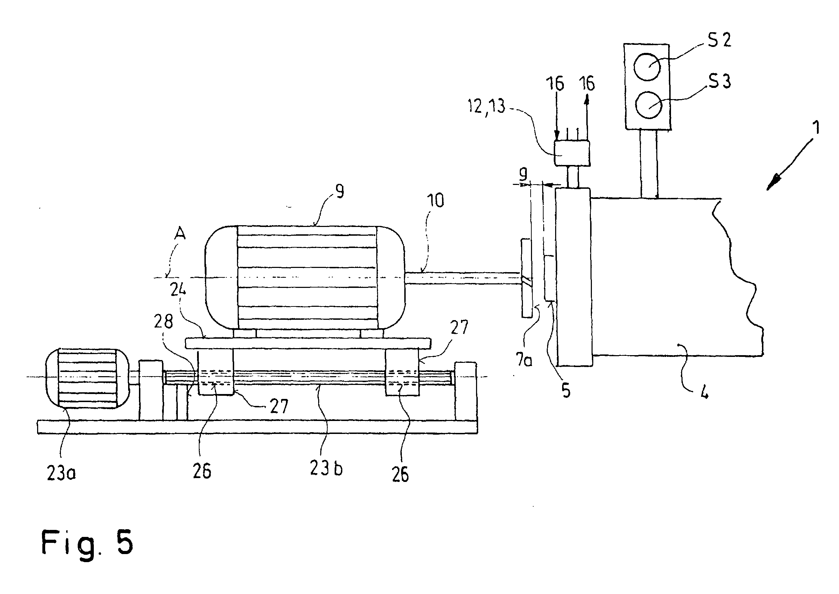

Ferner kann die Messanordnung auch eine Stufe 20 mit einem Korrektureingang C zur Korrektur einer allfälligen Offset-Spannung aufweisen. Am Ausgange der Stufe 20 steht dann das IST-Signal zur Verfügung, das einer Vergleichseinrichtung 21 zum Vergleich mit einem Normal- oder SOLL-Wert N zur Ermittlung einer Regelabweichung zugeführt wird. Diese Regelabweichung wird zweckmässig am Ausgang der Stufe 21 angezeigt, beispielsweise mittels eines Druckers 22. Parallel dazu ist eine entsprechende Stelleinrichtung 23 vorgesehen, die die Regelabweichung in einen entsprechenden Verstellweg umsetzt. Diese Stelleinrichtung kann auf verschiedene, Fachleuten an sich geläufige Weise ausgebildet sein. Beispielsweise wäre es möglich, dass die Welle 10 einen axial sich erstreckenden Vorsprung aufweist, entlang dessen der mit einer entlanggleitenden Hülse versehene Messerkopf 8 verschiebbar ist. Zu diesem Zwecke kann die Hülse an einem Ende den Messerkopf 8 tragen, am anderen Ende aber einen tellerförmigen radialen Flansch, an dem eine Gabel der Stelleinrichtung 23 zum Verstellen entlang der Welle 10 angreift. Auch der Antrieb der Stelleinrichtung kann an sich beliebig ausgestaltet werden, wie etwa als elektrischer Läufermotor, als fluidischer (hydraulischer oder pneumatischer) Motor, insbesondere in Form einer Kolben-Zylinder-Anordnung, in Gestalt von Solenoiden, usw. Eine besondere Ausgestaltung wird nachstehend an Hand der Fig. 5 erläutert.

In Fig. 5 ist ein Teil des Extrudergehäuses 4 zu sehen, an dessen Frontseite die Matrize 5 befestigt ist. In einem geringen Abstand g von der Oberfläche dieser Matrize 5 (dieser Abstand ist in Fig. 5 übertrieben gross dargestellt) befindet sich der Messerkopf 8. Der Abstand oder Spalt g soll eine gewisse Mindestgrösse haben, um gerade noch ein Schleifen der jeweiligen Schneidkante 7a an der Oberfläche der Matrize 5 zu verhindern, was zu einem erhöhten Verschleiss dieser Schneidkante führen würde. Anderseits soll der Spalt g, abhängig von der Art des Produktes, nicht zu gross sein, um ein scherendes Zusammenwirken mit der Oberfläche der Matrize 5 beim Abtrennen des strangförmigen, aus der jeweiligen Öffnung 6 (vgl. Fig. 1) austretenden Produktes zu gewährleisten und Ausbrüche und Staubentwicklung, aber auch eine Deformation des Strangproduktes, möglichst zu vermeiden. Letzteres gilt beispielsweise besonders dann, wenn das Produkt ein dreidimensionales sein soll, wie es etwa nach der DE-A-196 16 345 oder dem dieser Patentanmeldung zugrundeliegenden Stand der Technik der Fall ist.

Daher wird der Spalt g nach Betätigen des Schalters S2 mit Hilfe des Sensors 12 gemessen und das Messsignal in der Vergleichseinrichtung 21 mit dem Sollwert N verglichen. Das sich daraus ergebende Signal wird der Stelleinrichtung 23 zugeführt, die einerseits einen Servomotor 23a und anderseits eine von diesem angetriebene Schraubspindel 23b umfasst. Die Schraubspindel durchsetzt das Innengewinde 26 mindestens eines der Halter 27 an einem entlang der Schraubspindel 23b verschiebbaren Schlittens 24, auf dem der Motor 9 befestigt ist. Ein Endanschlag 28 oder ein entsprechender End(um)schalter für den Servomotor 23a verhindert ein zu weites Zurückweichen des Schlittens 24. Ferner könnte an diesem Anschlag ein Schalter (oder der schon genannte Endschalter) zur Angabe der Endposition (x) an das Programm im Speicher RAM1 vorgesehen sein. Die Funktion dieser Angabe der Position (x) wird später an Hand der Fig. 6 erläutert. Eine solche Schlittenkonstruktion würde es auch ermöglichen, den Messerkopf nicht unmittelbar von der Motorwelle 10 anzutreiben, sondern über eine Über- oder Untersetzung auf eine parallel zur Welle 10 verlaufende Messerwelle.

Es ist durchaus möglich, mehr als einen Sensor 12 zu verwenden, beispielsweise um durch Messung an einander gegenüberliegenden Stellen eine Schieflage der Welle 10 und ihrer Achse A gegenüber der Längsachse der Extrudiervorrichtung 1 genauer festzustellen. Theoretisch kann dann ebenfalls eine automatische Nachstellung bis zum Fluchten der beiden Achsen erfolgen, doch kann eine solche Schieflage auch durch eine parallel zur Anzeigeeinrichtung 22 (Fig. 1) liegende akustische und/oder visuelle Alarmeinrichtung 22a angezeigt werden oder unmittelbar die Abschaltung des Extruderantriebes auslösen.

Falls das eingangs erwähnte Messprogramm im Speicher RAM1 vorgesehen ist, kann der Ablauf der folgende sein. Sobald das Programm über den Schalter S2 oder über den Hauptschalter S4 für den Extruder 1 (wie strichliert durch die Linie 32 in Fig. 1 angedeutet ist) eingeschaltet worden ist, fährt die Einrichtung in eine Ausgangslage, d.h. der Schlitten 24 an den Anschlag 28. Ein solches Vorgehen ist besonders zweckmässig, wenn die Annäherung an den Sollwert in Inkrementalschritten, beispielsweise von nur 0,01 mm oder mehr, erfolgen soll, weil so die "0"-Lage vom System erkannt wird. Sodann kehrt sich die Drehrichtung des Servomotors 23a um, und der Schlitten fährt mit dem Messerkopf 8 wieder auf die Matrize 5 zu. Dabei wird eine Entscheidungsraute x > x1 abgefragt, wobei x1 ein Sicherheitsabstand vor der Matrize 5 ist, d.h. ein gewisser Prozentsatz von z.B. 95% des Gesamtweges auf die Matrize 5 zu. So lange die aktuelle Position x des Schlittens 24 weiter von der Matrize 5 entfernt ist als der genannte Sicherheitsabstand x1 ("NO" an der Entscheidungsraute x > x1), kann der Schlitten 24 mit voller Geschwindigkeit auf die Matrize 5 zu fahren. Ist jedoch die aktuelle Position x des Schlittens 24 grösser oder gleich x1 ("Y" an der Entscheidungsraute x > x1), dann wird der Schlitten 24 als zu nahe an der Matrize 5 angesehen, und der Messvorgang wird, zweckmässig unter Abgabe einer Alarmmeldung beispielsweise über 22a, abgebrochen, wie in Fig. 6 durch 30, 30a angedeutet ist. Eine Variante wäre, dass dann die Bewegungsrichtung des Schlittens 24 neuerlich umgekehrt wird, bis er entweder an einer Position x steht, die grösser als x1 ist oder in der Endposition am Anschlag 28 wieder anschlägt.

Wenn jedoch die Bedingung x > x1 erfüllt ist, dann wird die Geschwindigkeit des Schlittens 24 auf eine Folge von Schritten beschränkt, die durch das weitere Programm gegeben ist. In der Stufe 12a dieses Programmablaufes wird nämlich erst einmal der Sensor 12 aktiviert und sein Signal in der schon erörterten Weise verarbeitet. Anschliessend erfolgt in einer Stufe 21a ein Vergleich mit dem jeweiligen Sollwert N (Fig. 1). Dabei kann die Vergleichsstufe 21 (Fig. 1) derart ausgebildet sein, dass sie auch eine Bewertung IST > SOLL durchführt, wie dies bei der Entscheidungsraute 21a der Fall ist. Im Falle "No" wird der Schritt 23' durchgeführt, d.h. der Schlitten 24 bewegt sich um einen Schritt (z.B. mindestens 0,01 mm) auf die Matrize 5 zu. Erfolgt der Vorschub des Schlittens nicht in Inkrementalschritten, so kann der Motor 9 beispielsweise für eine bestimmte Zeit in Vorwärtsrichtung eingeschaltet werden. Es ist jedoch ebenso möglich, fortlaufend zu messen und den Schlitten 24 entsprechend dem Messergebnis zu bewegen, bis der Sollwert erreicht ist und die Bewegung aufhört oder abgebremst wird.

Ergibt sich an der Entscheidungsraute 21a jedoch die Antwort "Ja" ("Y"), so fährt der Schlitten entsprechend der Programmstufe 23" um einen Schritt zurück, wobei die obigen Varianten analog dazu gelten. Anschliessend wiederholt sich der Ablauf mit einer neuerlichen Messung in der Stufe 12b und einer neuerlichen Bewertung 21b, wobei sich dieser Vorgang so lange wiederholt (wie durch die Rückführung 30 angedeutet ist), bis sich auf die Frage IST > SOLL an der Entscheidungsraute 21b die Antwort "No" ergibt. Dies bedeutet, dass dann die gewünschte Sollposition erreicht ist, und es ist zweckmässig, wenn dann diese Position über eine Rückführleitung 29 (Fig. 1) im Speicher RAM1 (oder einem damit verbundenen weiteren Speicher) gespeichert wird (Programmstufe 29a). Dann wird der Schalter S2 wieder geöffnet (Programmstufe 31).

Das Kalibrieren oder Eichen des Systems kann natürlich ein für allemal oder in Zeitabständen, z. B. von Hand aus, durchgeführt werden. Bevorzugt ist es jedoch, wenn jedesmal zu Beginn des Extruderbetriebes eine Kalibrierung durchgeführt wird. Zu diesem Zwecke ist der Hauptschalter S4 zweckmässig mit dem Schalter S3 für den Programmspeicher RAM2 verbunden, wie durch eine strichlierte Linie 33 in Fig. 1 angedeutet ist. Es ist vorteilhaft, wenn gleich nach Beendigung der Kalibrierung über den Speicher RAM2, das Messprogramm über den Speicher RAM1 abgewickelt wird, und zu diesem Zweck können die beiden Speicher RAM1, RAM2 miteinander über eine Leitung 34 miteinander verbunden oder auch in einer einzigen Speichereinheit untergebracht sein.

Hier sei erwähnt, dass eine Vielzahl von unterschiedlichen Typen von Speichern eingesetzt werden können, so dass hier die Bezeichnung "RAM" nicht einschränkend auf die Verwendung eines herkömmlichen "Random Access Memory" verstanden werden soll.

Mit der Betätigung des Schalters S3 beginnt das Kalibrierprogramm ähnlich wie das zuvor an Hand der Fig. 6 erörterte Messprogramm, d.h. es wird erst einmal die Position des Schlittens 24 bestimmt. Zu diesem Zweck ist es bevorzugt, wenn der Schlitten 24 z(oder jede andere Mechanik der Stelleinrichtung 23) zunächst in eine vorbestimmte Ausgangslage ($x_0$), insbesondere an den Anschlag 28 (Fig. 5), gefahren wird, wie dies nach dem Programmschritt 28a der Fig. 7 erfolgt. Diese Ausgangslage ($x_0$) wird sodann (z.B. über den erwähnten, am Anschlag 28 vorgesehenen Endschalter) an den Speicher RAM2 gemeldet und dort gespeichert (Programmschritt 28b).

Nun muss die Funktion der in Fig. 1 ersichtlichen Messeinrichtung überprüft werden. Dies kann wiederum automatisch erfolgen, indem das Programm RAM2 dafür sorgt, dass der Schlitten vor- und zurückgefahren und die dabei auftretenden Signale des Sensors 12 in geeigneter Form dargestellt werden. Dies kann über den Drucker 22 (Fig. 1) erfolgen, es kann aber auch noch parallel zum Drucker eine weitere Anzeigeeinrichtung, z.B. ein Oszilloskop-Schirm, eine LCD-Anzeige od.dgl. vorgesehen sein. Alternativ kann der Servomotor 23a (Fig. 5) auch von Hand aus vor- und zurückgeschaltet werden, wobei wiederum das Messsignal angezeigt wird. Dieser Vorgang geschieht im Programmschritt 123.

Durch die Beobachtung des angezeigten Messsignals (alternativ automatisch durch Zuführung des Messsignals zu einer Schwellwertstufe, die bestimmt, ob die an Hand der Fig. 3 und 4 erläuterten Schleifspitzen AS auftauchen) gelangt man dann zu einer optimalen Schneidposition des Messerkopfes 8, in der solche Spitzen AS gerade nicht mehr (oder in zu tolerierender Weise) vorhanden sind. Diese Position wird über eine Rückführleitung 35 (Fig. 1) im Programmschritt 35a an den Speicher RAM2 gemeldet und dort gespeichert. Wenn die Fortbewegung des Schlittens 24 in Inkrementalschritten erfolgt, wie dies bevorzugt ist, dann kann beispielsweise im Speicher RAM2 die Anzahl der Schritte gespeichert werden, die notwendig ist, um von der Ausgangslage x0 in die nun gefundene Schneidposition x2 zu gelangen.

Wie oben erläutert wurde, ist es zur Abkürzung des Messvorganges vorteilhaft, wenn der Schlitten 24 (oder eine entsprechende Mechanik) bis zu einem vorbestimmten Sicherheitsabstand $x_1$ relativ schnell bewegt wird. Nach Feststellung des Schneidabstandes $x_2$ mit dem zulässigen Mindestabstand g (Fig. 5) muss aber der Sicherheitsabstand $x_1$, der ja einem bestimmten Prozentsatz des Weges von der Ausgangslage $x_0$ bis zur Schneidposition $x_2$ entspricht, wie oben erläutert wurde, erst berechnet werden. Zu diesem Zwecke kann in die Rückführleitung 35 (Fig. 1) ein Rechner 36 eingeschaltet sein, der in einem Programmschritt 36a (Fig. 5) die notwendige Berechnung des Sicherheitsabstandes $x_1$, erst vornimmt. Gleichzeitig oder anschliessend muss auch das dem Sollwert entsprechende Messsignal (z.B. im Speicher RAM2 oder einem damit verbundenen gesonderten Speicher) abgespeichert werden, um zu Vergleichszwecken zur Verfügung zu stehen. Dieses dem Sollwert entsprechende Messsignal wird dann während des Ablaufes des Messprogrammes (s. Fig. 6) der Vergleichseinrichtung 21 als Sollwert-Signal N zugeführt zu werden.

## Patentansprüche

1. Verfahren zum Einstellen des Spaltes (g) zwischen mindestens einer Schneidkante (7a) und einer mit ihr zusammenwirkenden Extrudermatrize (5) einer Extrudiervorrichtung (1) mit Hilfe einer Stelleinrichtung (23) beim Auspressen und anschliessenden, im Zuge einer Schneidbewegung, wiederholten Schneiden eines extrudierten Stranges, wobei die Spaltbreite (g) zwischen der Schneidkante (7a) und der Extrudermatrize (5) bestimmt, der Wert der bestimmten Spaltbreite (g) mit einem Sollwert (N) verglichen und anschliessend mit Hilfe der Stelleinrichtung (23) der den Spalt (g) bestimmende gegenseitige Abstand von Extrudermatrize (5) und Schneidkante (7a) auf den gewünschten Sollwert eingestellt wird, **dadurch gekennzeichnet, dass** die Bestimmung der Spaltbreite (g) erfolgt, indem man die durch das Zusammenwirken der Schneidkante (7a) mit der Extrudermatrize (5) auftretenden Schwingungen (S) der Extrudermatrize (5) dürch Messüng des Körperschalls im Bereich der Extrüdermatrizze (5) erfasst und für die erfassten Schwingungen (S) den quadrierten Effektivwert (RMS) als Mass für den Abstand zwischen Messer (7) und Matrize (5) berechnet.

2. Verfahren nach Anspruch 1, **dadurch gekennzeichnet, dass** das Messen während des Betriebes mindestens eines Teiles der Extrudiervorrichtung (1) erfolgt, vorzugsweise während der Schneidbewegung der Schneidkante (7a) relativ zur Extrudermatrize (5).

**3.** Verfahren nach Anspruch 2, **dadurch gekennzeichnet, dass** das Messen durch Messung des bei der Schneidbewegung zwischen Schneidkante (7a) und Extrudermatrize (5) erzeugten Schalles erfolgt, wobei vorzugsweise bei der Messung zyklisch wiederkehrende Amplitudenspitzen (AS), bevorzugt in einem ausgewählten Frequenzbereich, z.B. von 60 bis 1000 kHz, insbesondere 100 bis 600 kHz, bestimmt werden, und **dass** zweckmässig die Frequenz des Auftretens der Amplitudenspitzen (AS) bestimmt wird.

**4.** Verfahren nach einem der vorhergehenden Ansprüche, **dadurch gekennzeichnet, dass** die Messung zugleich mit dem Start der Extrudiervorrichtung (1) ausgelöst und später wenigstens einmal wiederholt wird.

**5.** Extrudiervorrichtung (1) mit mindestens einer Presseinrichtung (3) zum Hindurchpressen eines zu extrudierenden Materials durch mindestens eine Öffnung (6) einer Matrize (5), der mindestens eine Schneidkante (7a) zum Schneiden des durch die Öffnung (6) hindurchgepressten Materials zugeordnet ist, wobei der Abstand (g) der Schneidkante (7a) von der Matrize (5) mit Hilfe einer Stelleinrichtung (23) einstellbar ist, wobei sie zur Durchführung des Verfahrens nach einem der vorhergehenden Ansprüche im Bereiche der Matrize (5) einen Schallsensor (12) einer Einrichtung (12, 17, 18, 19) für die Bestimmung des Abstandes bzw. des Spaltes (g) zwischen der Schneidkante (7a) und der Matrize (5) aufweist, deren Ausgangssignal einer Vergleichseinrichtung (21) zum Vergleich mit einem Sollwert (N) zuführbar ist, und dass das Ausgangssignal der Vergleichseinrichtung (21) der Stelleinrichtung (23) zur Einstellung des Abstandes bzw. Spaltes (g) auf den jeweiligen Sollwert zuführbar ist, **dadurch gekennzeichnet, dass** die Einrichtung (12, 17, 18, 19) weiterhin eine dem Schallsensor (12) nachgeschaltete Rechenstufe (18) zur Berechnung des quadratischen Effektivwertes (RMS) des Schallsensorsignals aufweist.

**6.** Extrudiervorrichtung nach Anspruch 5, **dadurch gekennzeichnet, dass** wenigstens eines der folgenden Merkmale vorgesehen ist:

a) die Presseinrichtung ist von mindestens einer Extruderschnecke (3) gebildet;
b) die Matrize (5) ist eine Flachmatrize;
c) es sind mindestens zwei um eine Achse (A) rotierende Schneidkanten (7a), insbesondere mit gleichem Winkelabstand voneinander, vorgesehen.

**7.** Extrudiervorrichtung nach Anspruch 5 oder 6, **dadurch gekennzeichnet, dass** ein Programmspeicher (RAM1 bzw. RAM2) für ein den Ablauf der Messung bestimmendes Programm und/ oder für ein Kalibrierprogramm vorgesehen ist.

**8.** Extrudiervorrichtung nach Anspruch 5, 6 oder 7, **dadurch gekennzeichnet, dass** die Einrichtung (12, 17, 18, 19) ein Tiefpassfilter (19), vorzugsweise von maximal 10Hz, aufweist.

**9.** Extrudiervorrichtung nach einem der Ansprüche 5 bis 8, **dadurch gekennzeichnet, dass** die Einrichtung (12, 17, 18, 19) ein Hochpassfilter (17), vorzugsweise für mindestens 1 kHz, insbesondere für mindestens 5 kHz, aufweist.

**10.** Extrudiervorrichtung nach einem der Ansprüche 5 bis 9, **dadurch gekennzeichnet, dass** die Einrichtung (12, 17, 18, 19) mindestens einen mit Hilfe einer Kühlanordnung (13, 15, 16) kühlbaren Sensor (12) aufweist.

**Claims**

**1.** A process for adjusting the gap (g) between at least a cutting edge (7a) and an extruder die (5) of an extruder (1) cooperating with the latter by means of a positioning unit (23) by expressing and subsequent cutting of an extruded strand, repeated during a cutting motion, whereby the gap width (g) between the cutting edge (7a) and the extruder die (5) is measured, the value of the determined gap width (g) is compared to a nominal value (N) and then by means of the positioning unit (23) the mutual distance determining the gap (g) from the extruder die (5) and cutting edge (7a) is adjusted to the desired nominal value, **characterised in that** the gap width (g) is determined by the oscillations (S) of the extruder die (5) resulting from the cutting edge (7a) cooperating with the extruder die (5) being recorded by measuring the body sound in the region of the extruder die (5) and the root-mean-square (r.m.s.) for the recorded oscillations (S) being calculated as a measured value for the distance between the cutter (7) and the die (5).

**2.** The process as claimed in Claim 1, **characterised in that** during operation measuring is performed at least of one part of the extruder (1), preferably during the cutting motion of the cutting edge (7a) relative to the extruder die (5).

**3.** The process as claimed in Claim 2, **characterised in that** measuring is performed by measuring the sound produced during the cutting motion between cutting edge (7a) and extruder die (5), whereby preferably cyclically recurring amplitude peaks (AS) are determined during measuring, preferably in a selected frequency range, e.g. from 60 to 1000 kHz, in particular 100 to 600 kHz, and **in that** the frequency of the occurrence of the amplitude peaks (AS) is effectively determined.

4. The process as claimed in any one of the preceding claims, **characterised in that** measuring is triggered at the same time as the start of the extruder (1) and is later repeated at least once.

5. An extruder (1) with at least one pressing device (3) for pressing through a material to be extruded through at least one opening (6) of a die (5), to which is assigned at least one cutting edge (7a) for cutting the material pressed in through the opening (6), whereby the distance (g) of the cutting edge (7a) from the die (5) can be adjusted by means of a positioning unit (23), whereby to carry out the process as claimed in any one of the preceding claims it has a acoustic sensor (12) of a device (12, 17, 18, 19) in the vicinity of the die (5) for ascertaining the distance or the gap (g) between the cutting edge (7a) and the die (5), whereof the output signal can be transmitted to a comparator (21) for comparison with a nominal value (N), and in that the output signal of the comparator (21) can be transmitted to the positioning unit (23) for adjusting the distance or gap (g) to the respective nominal value, **characterised in that** the device (12, 17, 18, 19) also has a computing step (18) downstream of the acoustic sensor (12) for calculating the root-mean-square (r. m.s.) of the acoustic sensor signal.

6. The extruder as claimed in Claim 5, **characterised in that** at least one of the following characteristics is provided:

 a) the pressing device is formed by at least one extruding screw (3);

 b) the die (5) is a flat die ;

 c) there are provided at least two cutting edges (7a) rotating about an axis (A) in particular at the same angular distance from one another.

7. The extruder as claimed in Claim 5 or 6, **characterised in that** a program memory (RAM1 or RAM2) is provided for a program and/or for a calibrating program determining the sequence of measuring.

8. The extruder as claimed in Claim 5, 6 or 7, **characterised in that** the measuring device (12, 17, 18, 19) has a deep-pass filter (19), preferably of maximum 10 Hz.

9. The extruder as claimed in any one of Claims 5 to 8, **characterised in that** the measuring device (12, 17, 18, 19) has a high-pass filter (17), preferably for at least 1 kHz, in particular for at least 5 kHz.

10. The extruder as claimed in any one of Claims 5 to 9, **characterised in that** the measuring device (12, 17, 18, 19) has at least one sensor (12) which can be cooled by means of a cooling device (13, 15, 16).

**Revendications**

1. Procédé de réglage de la fente (g) entre au moins une arête de coupe (7a) et une matrice d'extrudeuse (5) coopérant avec celle-ci d'une installation d'extrusion (1) à l'aide d'un dispositif de réglage (23) lors de la presse et de la découpe répétée consécutive, au cours d'un mouvement de découpe, d'une ligne extrudée, la largeur de fente (g) entre l'arête de coupe (7a) et la matrice de l'extrudeuse (5) étant définie, la valeur de la largeur de fente définie (g) étant comparée à une valeur théorique (N) et ensuite la distance réciproque entre la matrice de l'extrudeuse (5) et l'arête de coupe (7a) définissant la fente (g) étant réglée à l'aide du dispositif de réglage (3) à la valeur théorique souhaitée, **caractérisé en ce que** la définition de la largeur de fente (g) a lieu en détectant les vibrations (S) de la matrice de l'extrudeuse (5) se produisant du fait de la coopération de l'arête de coupe (7a) avec la matrice d'extrudeuse (5) par mesure du son physique au niveau de la matrice de l'extrudeuse (5) et en calculant pour les vibrations détectées (S) la valeur au carré effective au carré (RMS) considérée comme la mesure de la distance entre le couteau (7) et la matrice (5).

2. Procédé selon la revendication 1, **caractérisé en ce que** la mesure a lieu pendant le fonctionnement d'au moins une partie de l'installation d'extrusion (1), de préférence pendant le mouvement de découpe de l'arête de coupe (7a) par rapport à la matrice de l'extrudeuse (5).

3. Procédé selon la revendication 2, **caractérisé en ce que** la mesure a lieu par mesure du son généré lors du mouvement de découpe entre l'arête de coupe (7a) et la matrice de l'extrudeuse (5), des pointes d'amplitude (AS) revenant cycliquement étant de préférence définies lors de la mesure, de préférence dans une plage de fréquence sélectionnée, par exemple de 60 à 1000 kHz, notamment 100 à 600 kHz, et que la fréquence de l'apparition des pointes d'amplitude (AS) est définie d'une manière rationnelle.

4. Procédé selon l'une quelconque des revendications précédentes, **caractérisé en ce que** la mesure est à la fois déclenchée au démarrage de l'installation d'extrusion (1) et répétée plus tard au moins une fois.

5. Installation d'extrusion (1) comportant au moins un dispositif de presse (3) pour la presse d'un matériau à extruder à travers au moins un orifice (6) d'une matrice (5) à laquelle est associée au moins une arête de coupe (7a) pour la découpe du matériau pressé à travers l'orifice (6), la distance (g) entre l'arête de base (7a) et la matrice (5) étant réglable à l'aide d'un dispositif de réglage (23), celui-ci présentant, pour la réalisation du procédé suivant l'une quelconque des revendications précédentes, au niveau de la matrice (5) un capteur acoustique (12) d'un dispositif (12, 17, 18, 19) de détermination de la distance ou de la fente (g) entre l'arête de coupe (7a) et la matrice (5), dont le signal de sortie peut être communiqué à un dispositif comparatif (21) pour comparaison avec une valeur théorique (N), et que le signal de sortie du dispositif comparatif (21) du dispositif de réglage (23) servant au réglage de la distance ou de la fente (g) à la valeur théorique respective peut être communiqué, **caractérisée en ce que** le dispositif (12, 17, 18, 19) présente de plus un niveau de calcul (18) installé en aval du capteur acoustique (12) pour le calcul de la valeur au carré effective (RMS) du signal du capteur acoustique.

6. Installation d'extrusion selon la revendication 5, **caractérisée en ce qu'**au moins une des caractéristiques suivantes est prévue :

> a) le dispositif de presse est constitué par au moins une vis sans fin d'extrudeuse (3);
> b) la matrice (5) est une matrice plate ;
> c) il est prévu au moins deux arêtes de coupe (7a) tournant autour d'un axe (A), présentant notamment le même écart angulaire l'une par rapport à l'autre.

7. Installation d'extrusion selon la revendication 5 ou 6, **caractérisée en ce qu'**une mémoire de programmation (RAM1 ou RAM2) est prévue pour un programme définissant le déroulement de la mesure et/ou pour un programme de calibrage.

8. Installation d'extrusion selon la revendication 5, 6 ou 7, **caractérisée en ce que** l'installation (12, 17, 18, 19) présente un filtre passe-bas (19), de préférence de 10 Hz au maximum.

9. Installation d'extrusion selon l'une quelconque des revendications 5 à 8, **caractérisée en ce que** le dispositif (12, 17, 18, 19) présente un filtre passe-haut (17), de préférence pour au moins 1 kHz, notamment pour au moins 5 kHz.

10. Installation d'extrusion selon l'une quelconque des revendications 5 à 9, **caractérisée en ce que** le dispositif (12, 17, 18, 19) présente de préférence un capteur (12) pouvant être refroidi à l'aide d'un système de refroidissement (13, 15, 16).

Fig. 1

EP 0 972 622 B1

Fig. 2

Fig. 3

Fig. 4

Fig. 5

Fig. 6

Fig. 7